# EUROPEAN PATENT APPLICATION

(11) **EP 4 641 533 A1**
(43) Date of publication of application: **29.10.2025**
(21) Application number: 25153193.5
(22) Date of filing: 21.01.2025
(51) Int. Cl.: G07G 1/00, G06Q 20/20, G06V 20/52, G06V 40/20, G07G 1/01, G07G 1/14, G07G 3/00

(54) **DETECTION DEVICE AND REGISTRATION SYSTEM**

(30) Priority: 23.04.2024 JP 2024070000
(71) Applicant: Toshiba TEC Kabushiki Kaisha, Tokyo 141-8562 (JP)
(72) Inventor: Hiramatsu, Naotake, Tokyo, 141-8562 (JP)
(74) Representative: Bandpay & Greuter

(57) **Abstract**

According to one embodiment, a detection device for a registration system has a communication interface connectable to a point-of-sale terminal, a camera, and a monitoring terminal. A processor of the detection device
receives a camera image from the camera depicting a customer at the point-of-sale terminal and point-of-sale event signals from the point-of-sale terminal. The point-of-sale event signals correspond to operations of the customer performed at the point-of-sale terminal. The processor determines, based on the received camera image and the received point-of-sale event signals, whether a reportable act has occurred at the point-of-sale terminal and outputs a report of the reportable act to the point-of-sale terminal if a threshold number of occurrences set for the reportable act has been met during the operations of the customer at the point-of-sale terminal. The report causes the point-of-sale terminal to provide notice to the customer.

## Description

### FIELD

Embodiments described herein relate generally to a detection device, a registration system incorporating a detection device, and a processing method of a detection device for handling potential fraudulent acts in a self-registration-type point-of-sale system or the like.

### BACKGROUND

Recently, due to labor shortages or soaring labor costs, self-checkout systems where a customer (buyer) self-performs everything from product registration to payment handling have become popular. On the other hand, there are many concerns about fraudulent acts such as packing a bag without scanning merchandise in a self-checkout system. Therefore, a system has been developed to capture the buyer's behavior with a camera and then analyze the images with Artificial Intelligence (AI) to detect a suspected fraudulent act and make a report to a store clerk or the like.

However, when using such AI image analysis, there is a possibility that a non-fraudulent act will be mistakenly detected as a fraudulent act, which increases false accusations of fraudulent acts, leading to complaints from buyers.

### DISCLOSURE OF INVENTION

There is provided a detection device according to claim 1. Preferred embodiments are set out in the dependent claims. There is also provided a registration system according to claim 12 and a computer-readable, non-transitory medium storing program instructions according to claim 13. Preferred embodiments are set out in the dependent claims.

### BRIEF DESCRIPTION OF THE DRAWINGS

FIG. 1 is a schematic diagram showing a self-checkout system according to an embodiment.
FIG. 2 is a perspective view of a self-POS terminal.
FIG. 3 is a block diagram of a self-POS terminal.
FIG. 4 is a block diagram of a detection terminal.
FIG. 5 is a schematic diagram of a setting table.
FIG. 6 is a schematic diagram of a counting table.
FIG. 7 is a sequence diagram illustrating operations related to detection and reporting in a detection terminal along with operations of a camera and a self-POS terminal in the same system.
FIG. 8 is a flowchart of information processing executed by a processor of a detection terminal.
FIG. 9 is a schematic diagram showing a reporting act detection operation for a reporting act item "omitted scan."
FIG. 10 is a schematic diagram showing a reporting act detection operation for a reporting act item "weight error."
FIG. 11 is a schematic diagram showing a reporting act detection operation for a reporting act item "expensive merchandise error."
FIG. 12 is a schematic diagram showing a reporting act detection operation for a reporting act item "cart-bottom merchandise error."
FIG. 13 is a schematic diagram showing a reporting act detection operation for a reporting act item "number of purchased items: large."
FIG. 14 is an example of a registration screen displayed on a touch panel of a self-POS terminal.
FIG. 15 is an example of a registration screen of a self-POS terminal that has received a reporting act item "omitted scan" event.
FIG. 16 is an example of a monitoring screen displayed on a display of a monitoring terminal.
FIG. 17 is a sequence diagram illustrating operations related to detection and reporting in a detection terminal of a second embodiment along with the operations of a camera and a self-POS terminal in the same system.
FIG. 18 is a flowchart of information processing executed by a processor of a detection terminal in a second embodiment.
FIG. 19 depicts an external configuration of a self-POS terminal in another embodiment.
FIG. 20 is a transition diagram of a screen displayed on a buyer display of a self-POS terminal in another embodiment.
FIG. 21 is a schematic configuration diagram of a self-checkout system according to another embodiment.

### DETAILED DESCRIPTION

In general, according to one embodiment, there is provided a detection device capable of preventing or reducing fraudulent acts efficiently and effectively while reducing the risk of reporting false detections of such acts to customers.

According to one embodiment, a detection device for a registration system includes a communication interface connectable to a point-of-sale terminal, a camera, and a monitoring terminal. The detection device further includes a processor configured to: receive a camera image from the camera via the communication interface, the camera image depicting a customer at the point-of-sale terminal; receive point-of-sale event signals from the point-of-sale terminal via the communication interface, the point-of-sale event signals corresponding to operations of the customer at the point-of-sale terminal; determine, based on the received camera image and the received point-of-sale event signals, whether a reportable act has occurred in the operations of the customer at the point-of-sale terminal; and output a report of the reportable act to the point-of-sale terminal via the communication interface if a threshold number of occurrences set for the reportable act has been met or exceeded during the operations of the customer at the point-of- sale terminal, the report causing the point-of- sale terminal to provide a notification of the reportable act to the customer.

Hereinafter, certain example embodiments of an information processing device capable of preventing or reducing fraudulent acts efficiently and effectively while reducing the risk of reporting false detection to buyers will be explained using the drawings.

### First Embodiment

First, an embodiment of a self-checkout system to which an information processing device is applied will be described.

### Explanation of self-checkout system

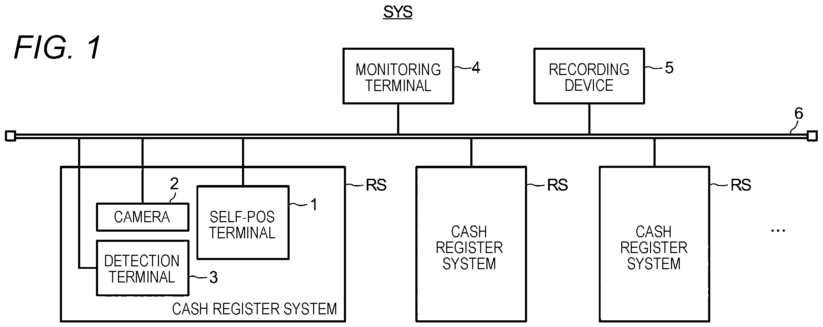

FIG. 1 is a schematic configuration diagram showing a self-checkout system SYS according to an embodiment. The self-checkout system SYS includes a plurality of self-POS terminals 1, a plurality of cameras 2, a plurality of detection terminals 3 (corresponding to a detection device), a monitoring terminal 4, and a recording device 5. Specifically, in this example self-checkout system SYS, one camera 2 and one detection terminal 3 are associated with each self POS terminal 1 to form a cash register system RS. Each cash register system RS is located in the accounting (checkout) area of the store. In the self-checkout system SYS, the self-Point of Sales (POS) terminal 1, the camera 2, and the detection terminal 3 of each cash register system RS are connected to the monitoring terminal 4 and the recording device 5 via a communication network 6 such as a Local Area Network (LAN). In the present embodiment, the detection terminal 3 functions as an information processing device for preventing or reducing fraudulent acts efficiently and effectively while reducing the risk of reporting false detection to buyers.

In the self-POS terminal 1, a buyer who has completed shopping becomes a user. Typically, the buyer places purchased merchandise in a shopping basket or the like while shopping on the sales floor, and then moves to the accounting area and operates the self-POS terminal 1 to perform self-settlement processing including registration of the purchased merchandise to payment of the transaction price. The self-POS terminal 1 is an example of a fully self-service transaction processing device. In other examples, the transaction processing device may not be a full self-service device. In some systems, a buyer performs registration of purchased merchandise using another device, and the transaction processing device may be a settlement-only device in which the buyer performs operations related to payment of the transaction price based on the purchased merchandise registered with the other device.

The self-POS terminal 1 transmits a POS event signal, which is event information showing operation details of the buyer, to the corresponding detection terminal 3 via a communication network 6. The POS event signal provides the behavior details of the buyer at the self-POS terminal 1 to the detection terminal 3.

The camera 2 also captures the behaviors of a buyer operating the self-POS terminal 1, and transmits the captured camera images to the corresponding detection terminal 3 via the communication network 6. Note, in the present example, camera images are transmitted via the communication network 6, but in other examples camera images can be transmitted directly from the camera 2 to the detection terminal 3 via a Universal Serial Bus (USB) cable, for example. In that case, there may be no need to separately set a networked correspondence between the detection terminal 3 in the camera 2 in advance. Further, the camera 2 can also transmit camera images to the recording device 5 via the communication network 6.

The detection terminal 3, which functions as an information processing device, is provided with an AI image analysis engine. The image analysis engine analyzes camera images from the camera 2, detects the behavior of the buyer, and identifies so-called "camera events" corresponding to that behavior. In other words, the camera 2 is one example of a sensor that detects the behavior of a buyer, and a "camera event" is an example of a first-type event identified based on the output of this sensor. The detection terminal 3 detects a buyer's act requiring a report based on the camera events identified by the image analysis engine and the POS event signals provided by the self-POS terminal 1. The detection terminal 3 may detect a reporting act based on a POS event alone, based on a camera event alone, or by such events in combination. The detection terminal 3 reports the detected act, that is, a report-triggering act ("a reporting act"), to the corresponding self-POS terminal 1 via the communication network 6. The detection terminal 3 reports the reporting act not only to the self-POS terminal 1, but also to the monitoring terminal 4.

The monitoring terminal 4 is operated by a clerk who is a supervisor who monitors a plurality of self POS terminals 1 connected via the communication network 6. The monitoring terminal 4 has a display screen. The monitoring terminal 4 displays information necessary for monitoring the plurality of selfPOS terminals 1 on the display screen. The displayed information also includes information about the reporting acts detected by the detection terminals 3.

The clerk monitors the self-POS terminals 1 using information displayed on the display screen. The clerk can see that an act presumed to be a fraudulent act has been performed by a buyer according to the information from a detection terminal 3. The clerk in this context may be called a supervisor or an attendant. The monitoring terminal 4 is an example of a supervisor terminal. The monitoring terminal 4 may be connected wirelessly to the communication network 6. For example, it may be a tablet terminal that can be carried by a clerk.

The recording device 5 is a storage device connected to communication network 6. The recording device 5 may be a Network Attached Storage (NAS) device or the like. The recording device 5 records the camera images from each camera 2.

### Explanation of self-POS terminal

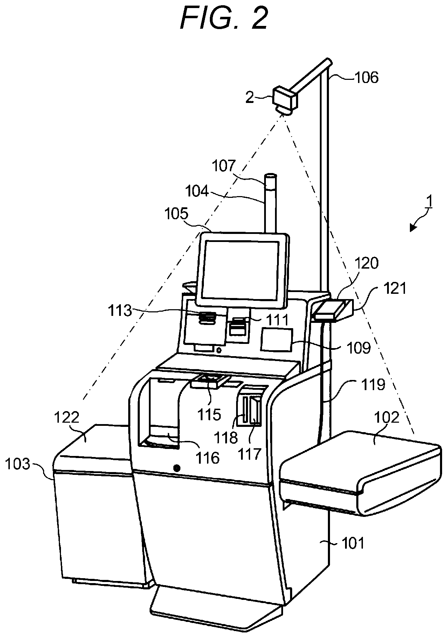

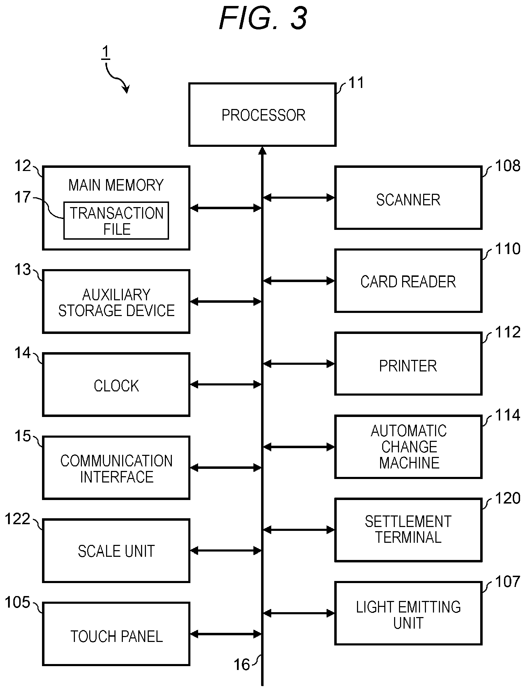

FIG. 2 is a perspective view of the self-POS terminal 1, and FIG. 3 is a block diagram of the self-POS terminal 1. As shown in FIG. 2, the self-POS terminal 1 has a main body 101 provided on the floor surface. The self-POS terminal 1 has a basket stand 102 and a bagging stand 103 on opposite sides of the main body 101. The basket stand 102 is for buyers coming from the sales floor to place baskets, or the like, containing items of merchandise to be purchased, and the bagging stand 103 is for placing plastic bags or shopping bags brought by the buyer, so-called personal bags. A display pole 104, a touch panel 105, and a camera pole 106 are attached to the top of the main body 101. The buyer stands in front of the main body 101 such that the screen of the touch panel 105 can be seen. Therefore, when viewed from the buyer side, the basket stand 102 is on the right side and the bagging stand 103 is on the left side of the main body 101. In the following explanation, the side where the buyer stands is also referred to as the front side of the main body 101, the side where the bagging stand 103 is provided is the referred to as the left side of the main body 101, and the side where the basket stand 102 is provided is referred to as the right side of the main body 101.

The display pole 104 has a light emitting unit 107 that selectively emits blue or red light, for example. The display pole 104 displays the current operating state of the self-POS terminal 1, such as a standby state, in-use state, clerk calling state, or an error state according to the light emitting color or pattern of the light emitting unit 107.

The touch panel 105 includes a display for displaying various screens related to transactions such as registration or accounting to a user operating the self-POS terminal 1 and a touch sensor for detecting touch input to the screen by the user. At the self-POS terminal 1, the user (operator) is usually a buyer. The touch panel 105 can also display information transmitted from the detection terminal 3 or the like via the communication network 6.

The camera pole 106 has a camera 2 attached to its upper end. The angle of view, that is, imaging area of the camera 2 includes an area from the basket stand 102 on the right side of the main body 101 to the bagging stand 103 on the left side, as shown by a dashed line in FIG. 2. In other words, the mounting position and posture of the camera 2 are set such that the user's behavior when operating the self-POS terminal 1 is covered by the imaging area. More specifically, the camera 2 is set to capture at least the upper-facing opening of a shopping basket placed on the basket stand 102 or a shopping cart positioned above the basket stand 102 as well as the opening a shopping bag or personal bag on the bagging stand 103. The normal route along which the merchandise moves when taken out of the shopping basket and then put into the shopping bag or personal bag placed on the bagging stand 103 is also covered by the imaging area.

On the front of the main body 101, a reading window 109 for a scanner 108 (see FIG. 3), a card insertion port 111 for a card reader 110 (see FIG. 3), and an issuing port 113 for receipts printed by a printer 112 (see FIG. 3) are provided. Furthermore, on the front of the main body 101, a coin slot 115, a coin dispenser 116, a banknote slot 117, and a banknote dispenser 118 for an automatic change machine 114 (see FIG. 3) are provided.

A communication cable 119 extends from the right side of the main body 101 to the outside, and a settlement terminal 120 for cashless settlement processing is connected to this communication cable 119. The settlement terminal 120 is placed on a stand 121 provided on the upper right side of the main body 101.

The bagging stand 103 includes a scale unit 122. The scale unit 122 measures the total weight of merchandise, or the like placed on the bagging stand 103.

As shown in FIG. 3, the self-POS terminal 1 is provided with a processor 11, a main memory 12, an auxiliary storage device 13, a clock 14, a communication interface 15, and a system transmission line 16 in addition to the touch panel 105, the light emitting unit 107, the scanner 108, the card reader 110, the printer 112, the automatic change machine 114, the settlement terminal 120, and the scale unit 122. The system transmission line 16 includes an address bus, a data bus, a control signal line, or the like. The system transmission line 16 connects the processor 11 and other units directly or via a signal input and output circuit, and transmits data signals exchanged between components. The self-POS terminal 1 is configured by connecting the processor 11, the main memory 12, the auxiliary storage device 13, the clock 14, and the communication interface 15 via the system transmission line 16.

The processor 11 controls each unit to implement various described functions of the self-POS terminal 1 according to an operating system and/or an application program. The processor 11 is, for example, a central processing unit (CPU). Examples of the processor 11 may include a Micro Processing Unit (MPU), a System on a Chip (SoC), a Digital Signal Processor (DSP), a Graphics Processing Unit (GPU), an Application Specific Integrated Circuit (ASIC), a Programmable Logic Device (PLD), a Field-Programmable Gate Array (FPGA), or the like. Alternatively, the processor 11 may be a combination of a plurality of these.

The main memory 12 includes a non-volatile memory area and a volatile memory area. The main memory 12 stores the operating system and the application program in the non-volatile memory area. The main memory 12 stores data necessary for the processor 11 to execute processing for controlling each unit in a non-volatile or volatile memory area. The main memory 12 uses the volatile memory area as a work area into which data is appropriately rewritten by the processor 11. A nonvolatile memory area is, for example, a Read Only Memory (ROM). The volatile memory area is, for example, a Random Access Memory (RAM).

The auxiliary storage device 13 can be, for example, an Electric Erasable Programmable Read-Only Memory (EEPROM), a Hard Disk Drive (HDD), a Solid State Drive (SSD), or the like. The auxiliary storage device 13 stores data used by the processor 11 to perform various processes, data generated by the process performed by the processor 11, or the like. The auxiliary storage device 13 may also store the above-mentioned application program.

The clock 14 tracks the date and time. The processor 11 processes the date and time provided by the clock 14 as the current date and time.

The communication interface 15 performs data communication to/from an external device connected via the communication network 6 according to a communication protocol set in advance. Such an external device may typically be the detection terminal 3. In other examples, the external device may instead or additionally be the monitoring terminal 4 or other equipment such as a store server or the like.

The scanner 108 reads the code symbol from merchandise held over the reading window 109. A code symbol corresponding to a merchandise code or the like for identifying the merchandise may be attached to each item sold at a store. The code symbol is, for example, a bar code. The code symbol may be, for example, a two-dimensional data code. The scanner 108 may be a type that reads code symbols by scanning laser light or a type that reads code symbols from images captured by an imaging device.

The card reader 110 reads card data recorded on a card medium such as a credit card or customer loyalty points card. The card reader 110 attracts a card medium inserted into the card insertion port 111 into the main body 101, reads card data, and then discharges the card from the card insertion port 111.

The printer 112 prints receipt data, or the like, for a commercial transaction on receipt paper. Receipt paper with receipt data printed on it is discharged from the issuing port 113.

The automatic change machine 114 includes a coin unit and a banknote unit. The coin unit sorts coins inserted into the coin slot 115 one by one, identifies the denomination, and stores the coins in a safe by denomination. The coin unit takes coins of the corresponding denomination from the safe based on change data, for example, and pays the coins out to the coin dispenser 116. The banknote unit sorts banknotes inserted into the banknote slot 117 one by one, identifies denominations, and stores the banknotes in a safe by denomination. The banknote unit takes banknotes of the corresponding denomination from a safe based on, for example, change data, and pays the banknotes out to the banknote dispenser 118.

The settlement terminal 120 reads and rewrites electronic money information recorded on an electronic money medium, for example. The electronic money medium is, for example, a contactless IC card. The electronic money medium may be an electronic apparatus such as a smartphone or tablet terminal.

The self-POS terminal 1 uses part of the volatile memory area in the main memory 12 as an area of the transaction file 17. The transaction file 17 is a data file for storing data relating to one commercial transaction being processed at the self-POS terminal 1. The transaction file 17 stores, for example, data such as transaction numbers, purchased merchandise data, total numbers of items, total amounts, discount amounts, settlement amounts, or the like. The transaction number is issued every time a commercial transaction is processed at the self-POS terminal 1. The purchased merchandise data is record data generated for each item sold in the commercial transaction identified by the transaction number. Here, the purchased merchandise data is composed of items such as merchandise codes, merchandise names, prices, the number of items, amounts, or the like. The number of items is the number of items purchased for merchandise identified by the same merchandise code. The amount (total price) is the amount to be paid for the number of purchased items. The transaction file 17 can store a plurality pieces of purchased merchandise data. The total number of items is obtained by adding the number of items of each piece of purchased merchandise data. The total amount is the amount obtained by summing the amount of each piece of purchased merchandise data. The discount amount is the amount discounted from the total amount. The settlement amount is the amount obtained by subtracting the discount amount from the total amount.

### Explanation of configuration of detection terminal

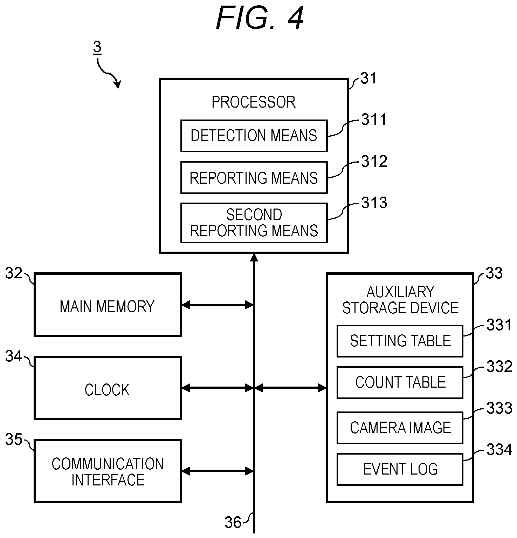

FIG. 4 is a block diagram of the detection terminal 3. The detection terminal 3 includes a processor 31, a main memory 32, an auxiliary storage device 33, a clock 34, a communication interface 35, and a system transmission line 36. The system transmission line 36 includes an address bus, a data bus, a control signal line, or the like. The system transmission line 36 connects the processor 31 and other units directly or via a signal input and output circuit, and transmits data signals exchanged between each other. The detection terminal 3 is configured by connecting the processor 31, the main memory 32, the auxiliary storage device 33, the clock 34, and the communication interface 35 via the system transmission line 36. The detection terminal 3 may be called a transaction processing device or a component thereof.

The processor 31 controls sub-units and the like to implement various functions of the detection terminal 3 according to an operating system or an application program. The processor 31 is, for example, a CPU. The processor 31 may be multi-core/multi-threaded, and can execute a plurality of processes in parallel. The processor 31 may, for example, be an MPU, SoC, DSP, GPU, ASIC, PLD, or FPGA. Alternatively, the processor 31 may be a combination of a plurality of these.

The main memory 32 includes a non-volatile memory area and a volatile memory area. The main memory 32 stores the operating system and/or the application program in the non-volatile memory area. The main memory 32 stores data necessary for the processor 31 to execute processing in a non-volatile or volatile memory area. The main memory 32 uses the volatile memory area as a work area into which data can be appropriately written and rewritten by the processor 31. The non-volatile memory area is, for example, a ROM. The volatile memory area is, for example, a RAM.

The auxiliary storage device 33 corresponds to, for example, an EEPROM, HDD, or SSD, or the like. The auxiliary storage device 33 stores data used by the processor 31 to perform various processes, data generated by the processor 31, or the like. The auxiliary storage device 13 may also store the application program.

The application program stored in the main memory 32 or the auxiliary storage device 33 includes, for example, an information processing program for making a computer function as an information processing device according to the first embodiment and an image analysis program for implementing an AI image analysis engine. The method of installing these programs in the main memory 32 or the auxiliary storage device 33 is not particularly limited. The program can be provided in the main memory 32 or the auxiliary storage device 33 by being recorded on a removable recording medium, or by being distributed via a network. The recording medium may be in any format such as a CD-ROM, a memory card, or the like as long as it can non-transitorily store a program and is readable by a computer device.

The clock 34 tracks the date and time. The processor 31 processes the date and time provided by the clock 34 as the current date and time.

The communication interface 35 performs data communication to/from an external device connected via the communication network 6 according to a communication protocol set in advance. Examples of external devices include the self-POS terminal 1, the camera 2, the monitoring terminal 4, and the recording device 5.

The detection terminal 3 uses part of the storage area of the auxiliary storage device 33 as an area of a setting table 331, a count table 332, a camera image storage unit 333, and an event log storage unit 334.

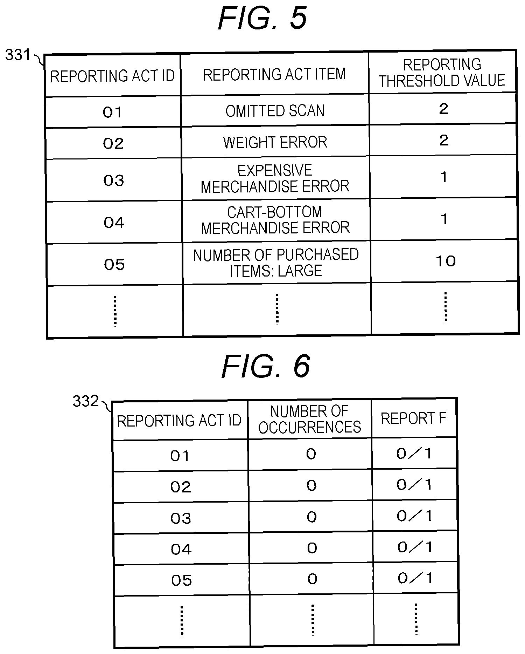

As shown in FIG. 5, the setting table 331 is a data table listing setting data for each reporting act item and a reporting threshold value in correlation with an reporting act ID. The reporting act ID is unique identification set for each reporting act in order to identify the type of a reporting act corresponding to a buyer's action at the self-POS terminal potentially requiring a report.

In this context, a reporting act item is the name used for representing a particular buyer's act at the self-POS terminal 1 requiring a report. In the present description, five different reporting act items are used as examples: "omitted scan," "weight error," "expensive merchandise error," "cart-bottom merchandise error," and "number of purchased items: large.". Each reporting act type will be described below.

The reporting threshold value serves as a criterion (setting) for when to report a reporting act specified by the corresponding reporting act ID. This value is typically the number of times the act has occurred within the same transaction before a report/notification is issued to the buyer at the self-POS terminal 1. However, the threshold value may also relate to the number of purchased items in the same transaction. In the present embodiment, when the number of occurrences of a reporting act is less than the reporting threshold value, a report is not made at the self-POS terminal 1, but when the number of occurrences is equal to or greater than the reporting threshold value, a report is made. The reporting destination can be a transaction processing device for the buyer who has performed the act, that is, the self-POS terminal 1 that the buyer is presently using. The reporting destination may also include or be a monitoring terminal 4, which is a supervisor terminal.

As shown in FIG. 6, the count table 332 is a data table describing the number of occurrences and the report flag (report F) in correlation with the reporting act ID. The number of occurrences is set to "0" by default before a transaction is started. The number of occurrences is counted up by "1" each time a reporting act specified by the corresponding reporting act ID occurs in the same transaction. The report flag is "0" by default before a transaction is started. The report flag becomes "1" when the number of occurrences of the reporting act specified by the corresponding reporting act ID in one transaction reaches the reporting threshold value of the reporting act. A reporting act where the report flag is "1" is reported to the reporting destination described above. In other words, a report flag is 1-bit data for identifying whether to report a reporting act specified by a corresponding reporting act ID.

The camera image storage unit 333 sequentially stores camera images from the corresponding camera 2. The event log storage unit 334 sequentially stores a POS event log from the self-POS terminal 1 and a camera event log determined from camera images. The camera image storage unit 333 and the event log storage unit 334 can delete stored contents as necessary at any timing, for example, outside of business hours of a store.

Refer back to the description of FIG. 4.

As shown in FIG. 4, the processor 31 of the detection terminal 3 functions as detection means 311, reporting means 312, and second reporting means 313. These functions are implemented by performing
information processing according to the information processing program and image analysis program described above.

The detection means 311 provides a function of detecting a reporting act (that is a buyer's act requiring a report) at a transaction processing device, such as the self-POS terminal 1. The detection means 311 detects reporting acts by type. For example, the detection means 311 detects a reporting act based on a first event determined by an image analysis engine based on the output of a sensor that detects buyer's behavior, such as the camera 2. The first event here may also be called a camera event. The detection means 311 may also detect a reporting act based on second event showing behavior details of the buyer as reported from the self-POS terminal 1. The second event here may also be called a POS event. The detection means may detect a reporting act based on a combination of a first event and a second event. The detection means 311 in the present example detects reporting acts classified into , the five types described above: "omitted scan," "weight error," "expensive merchandise error," "cart-bottom merchandise error," and "number of purchased items: large."

The reporting means 312 provides a function of making (outputting) a report or a notification, after the reporting act detected by the detection means 311 has exceeded a threshold value for reporting of the act. The reporting means 312 makes a report to the self-POS terminal 1 at which the buyer performed the detected reporting act when the threshold value of the criterion for the reporting act is exceeded.

The second reporting means 313 has a function of making a report to the supervisor terminal, that is, the monitoring terminal 4, when the reporting act is detected by the detection means 311. The second reporting means 313 makes a report to the monitoring terminal 4, when a reporting act is detected, regardless of the reporting threshold value.

### Explanation of operation of detection terminal

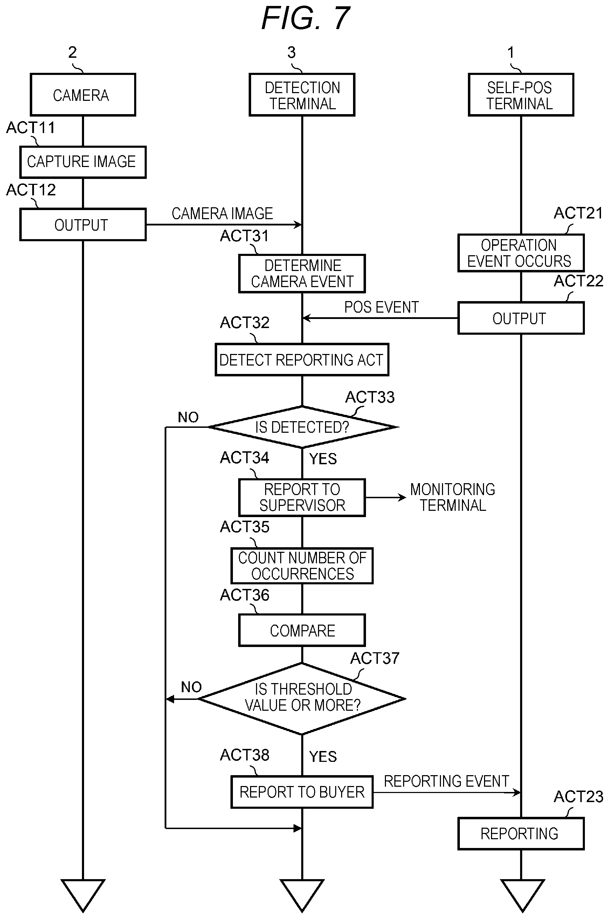

FIG. 7 is a sequence diagram illustrating operations related to detection and reporting of reporting acts in the detection terminal 3 along with the operations of the camera 2 and the self-POS terminal 1 in the same cash register system RS.

As shown in FIG. 7, the camera 2 captures an image (ACT11) and outputs the captured camera image to a corresponding detection terminal 3 (ACT12). For example, the camera 2 is equipped with a human detection function, and transmits the camera image in which the buyer is reflected in the captured camera image. Alternatively, the camera 2 is equipped with a moving object detection function instead of a human detection function, and may transmit the camera image in which a moving object is reflected in the camera image. Further, the camera 2 itself does not have such a function, a human detection sensor or the like may be separately disposed on the self-POS terminal 1, and the camera 2 may capture an image only while a person is detected in the sensor output, and transmit the camera image. Thus, the camera 2 can transmit camera images in transaction units by buyers. It should be noted that the camera 2 transmits camera images not only to the detection terminal 3 but also to the recording device 5. The recording device 5 records camera images in a data file in chronological order. The recording device 5 records camera images in data files by adding a different file name to each camera 2, for example.

The detection terminal 3 that has received the camera image analyzes the camera image using an AI image analysis engine, detects the behavior of the buyer, and determines a camera event corresponding to that behavior (ACT31). For example, when the detection terminal 3 detects the behavior of a buyer taking out merchandise from the basket stand 102 from a camera image, it determines a camera event corresponding to that behavior. Hereafter, this camera event is called a merchandise take-out event CIa. The merchandise take-out event CIa may also include a merchandise code for the merchandise specified by data on exterior feature of the merchandise taken by the buyer from the basket stand 102.

For example, when a buyer's behavior of holding merchandise over the reading window 109 of the scanner 108 is detected from the camera image, the detection terminal 3 determines a camera event corresponding to that behavior. Hereafter, this camera event is called as a scan behavior event CIb. The scan behavior event CIb may also include a merchandise code for the merchandise specified by the buyer using data on exterior feature of the merchandise held over the reading window 109 of the scanner 108.

For example, when the detection terminal 3 detects a behavior of a buyer storing merchandise in the plastic bag or personal bag placed on the bagging table 103 from a camera image, it determines a camera event corresponding to that behavior. Hereafter, this camera event is called as a merchandise bagging event CIc. The merchandise bagging event CIc may also include a merchandise code for the merchandise specified by the buyer using data on exterior feature of the merchandise stored in a plastic bag or personal bag placed on the bagging stand 103.

When the detection terminal 3 detects that merchandise is stored on the bottom of a shopping cart placed near the basket stand 102 from the camera image, it determines a camera event corresponding to the behavior of storing merchandise in the bottom of the cart. Hereafter, this camera event is called as a cart-bottom merchandise storage event CId. The cart-bottom merchandise storage event CId may also include a merchandise code for the merchandise specified by the data on exterior feature of the merchandise stored in the bottom of the cart. In this case, when two or more items of merchandise are placed in the bottom of the cart, the merchandise code for each item of merchandise is provided in the cart-bottom merchandise storage event CId.

It should be noted that the types of camera events determined by the detection terminal 3 are not limited to the four types described above: the merchandise take-out event Cla, the scan behavior event CIb, the merchandise bagging event CIc, and the cart-bottom merchandise storage event CId. The detection terminal 3 may determine another type of camera event from the camera image.

When some operation event occurs by the buyer (ACT21), the self-POS terminal 1 outputs a POS event showing the operation details to a corresponding detection terminal 3 (ACT22). For example, when the code symbol of the merchandise held over the reading window 109 of the scanner 108 is read, the self-POS terminal 1 outputs a POS event indicating the operation details. Hereafter, this POS event is called as a registration event PIa. The registration event PIa includes a merchandise code specified from a code symbol read by the scanner 108.

For example, when merchandise is placed on the bagging stand 103 and the measured weight of the scale unit 122 changes, the self-POS terminal 1 outputs a POS event indicating the operation details. Hereafter, this POS event is called as a weight event PIb. The weight event PIb includes measured weight after the change.

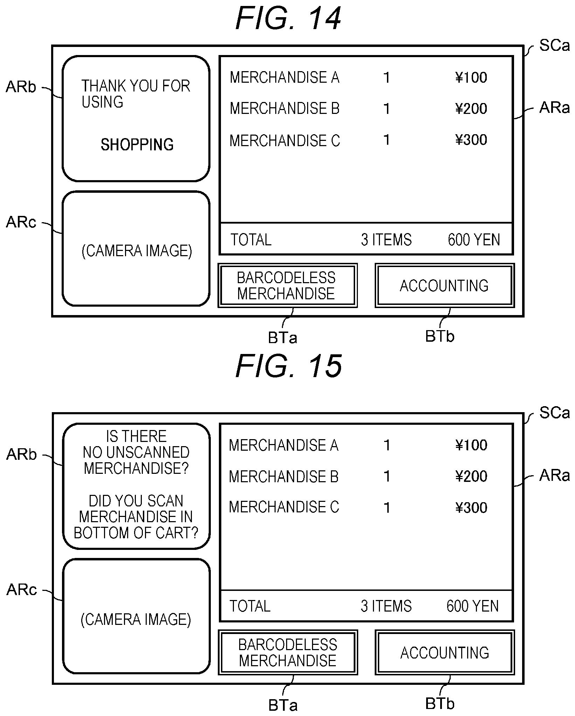

For example, when the "Accounting" touch button BTb displayed on the registration screen SCa (see FIG. 14) of the touch panel 105 is operated by touch, the self-POS terminal 1 outputs a POS event indicating the operation details. Hereafter, this POS event is called as an accounting event PIc. When the buyer completes registering the purchased merchandise, touch the "Accounting" touch button BTb.

It should be noted that the types of POS events output from the self-POS terminal 1 are not limited to the three types: the registration event PIa; the weight event PIb; and the accounting event PIc described above. The self-POS terminal 1 may output another type of POS event in response to the buyer's operation.

The detection terminal 3 detects a buyer's reporting act based on the POS event output from the self-POS terminal 1 and the camera event determined based on the camera image of the camera 2 (ACT32). The detection terminal 3 detects reporting acts called, for example, "omitted scan," "expensive merchandise error," "cart-bottom merchandise error," or "number of purchased items: large." Alternatively, the detection terminal 3 detects the buyer's reporting act based on the POS event output from the self-POS terminal 1 (ACT32). The detection terminal 3 detects a reporting act called, for example, a "weight error."

Thus, the detection terminal 3 detects the buyer's reporting act based on the POS events and the camera events. That is, the self-POS terminal 1 that outputs POS events and the camera 2 that outputs camera images used to identify camera events functions as output means for outputting information necessary to detect those buyer's act requiring a report.

The detection terminal 3 determines whether a buyer's reporting act is detected (ACT33). When a reporting act is detected (YES in ACT33), the detection terminal 3 reports to the supervisor that the reporting act has occurred. Specifically, the detection terminal 3 outputs a reporting event for reporting that a reporting act has occurred to the monitoring terminal 4 (ACT34).

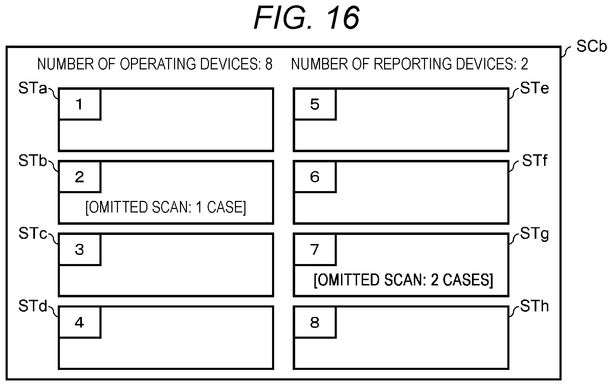

Note, upon receiving a report event from the detection terminal 3, the monitoring terminal 4 provides the report details on its display. For example, the monitoring terminal 4 displays the detected number of cases as "omitted scan: 0 case" on the monitoring screen SCb (see FIG. 16) initially. The case number on the display may be increased every time the detection terminal 3 detects the same reporting act (and sends the report event) for "omitted scan".

Also, the detection terminal 3 adds "1" to the number of occurrences associated with the reporting act ID for the reporting act type in the count table 332 (ACT35). The detection terminal 3 then compares the number of occurrences to the reporting threshold set in the setting table 331 for the reporting act type (ACT36).

The detection terminal 3 determines whether the number of occurrences is equal to or greater than the reporting threshold value (ACT37). When the number of occurrences is equal to or greater than the reporting threshold value (YES in ACT37), the detection terminal 3 reports to the buyer that a reporting act has occurred. Specifically, the detection terminal 3 outputs a reporting event to the self-POS terminal 1 where the buyer is the operator (ACT38). The self-POS terminal 1 that receives the reporting event outputs a report to the buyer by, for example, displaying information such as text or images showing the details of the reporting act on the touch panel 105 (ACT23). In some examples, the self-POS terminal 1 may instead or in addition report the details of the reporting act to the buyer by voice or sound output.

Note, for ACT33, if a reporting act is not detected (NO in ACT33), the detection terminal 3 skips the operations of ACT34 to ACT38. Similarly, for ACT37, when the number of occurrences is less than the reporting threshold value (NO in ACT37), the detection terminal 3 skips the operation of the ACT38.

The detection terminal 3 repeatedly performs operations shown by ACT31 to ACT38 until the merchandise for a transaction is registered at the self-POS terminal 1 and the transaction is settled (completed). Thus, the detection terminal 3 detects reporting acts occurring in the same transaction by type based on POS events outputted from the self-POS terminal 1 and camera events identified from images captured by the camera 2. Then, when the number of detections of the reporting act is equal to or greater than the reporting threshold value for the reporting act, the detection terminal 3 outputs a report event for reporting that the reporting act has been detected to the self-POS terminal 1 being operated by the buyer. Every time a reporting act is detected, a reporting event for that the reporting act can be output to the monitoring terminal 4.

### Explanation of program of detection terminal

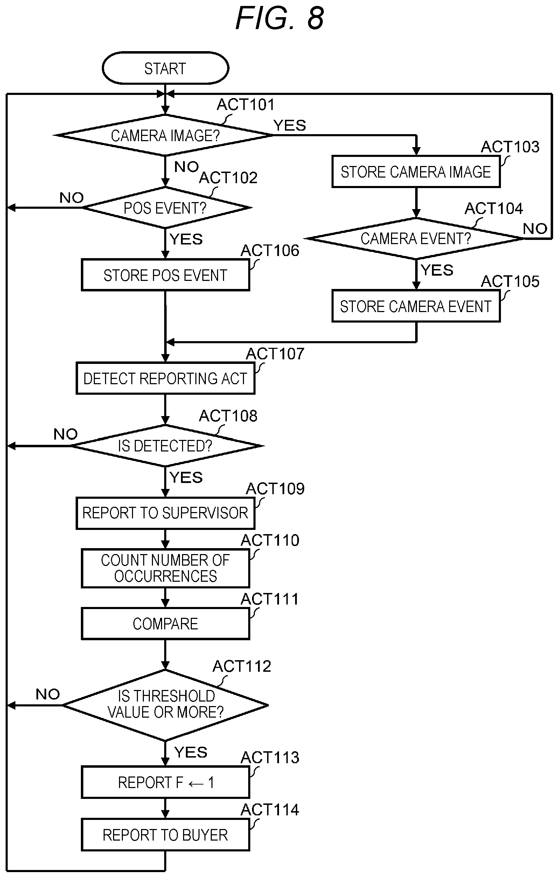

FIG. 8 is a flowchart for information processing executed by the processor 31 of the detection terminal 3. The processor 31 executes the information processing of the flowchart in FIG. 8 in accordance with an information processing program stored in the main memory 32 or auxiliary storage device 33.

The processor 31 checks whether camera images have been acquired from the camera 2 corresponding to the detection terminal 3, as ACT101. When camera images are not acquired, the processor 31 advances to ACT102. The processor 31 checks whether a POS event has been acquired from the self-POS terminal 1 corresponding to the detection terminal 3, as ACT102. When a POS event is not acquired, the processor 31 returns to ACT101. In this manner, the processor 31 waits to acquire a camera image or a POS event in ACT101 and ACT102.

When camera images are acquired in the standby state of ACT101 and ACT102, the processor 31 advances to ACT103. The processor 31 stores the camera image in the camera image storage unit 333, as ACT103. The processor 31 then analyzes the camera image stored in the camera image storage unit 333 by the AI image analysis engine to check whether a camera event can be identified, as ACT104. When a camera event is not identified, the processor 31 returns to the standby state of ACT101 and ACT102.

When a camera event is identified in ACT104, the processor 31 advances to ACT105. The processor 31 stores the camera event in the event log storage unit 334, as ACT105.

If a POS event is acquired in the standby state of ACT101 and ACT102, the processor 31 advances to ACT106. The processor 31 stores the POS event in the event log storage unit 334, as ACT106.

After the camera event or the POS event is stored in the event log storage unit 334 in ACT105 or ACT106, the processor 31 advances to ACT107. As ACT107, the processor 31 detects reporting of reporting act items set in the setting table 331 based on the camera events and POS events stored in the event log storage unit 334. The detection operation for each reporting act will be explained below.

The processor 31 checks whether a reporting act is detected, as ACT108. When a reporting act is not detected, the processor 31 returns to the standby state of ACT101 and ACT 102.

If the reporting of any reporting act item is detected in ACT108, the processor 31 advances to ACT109. The processor 31 makes a report to the supervisor, as ACT 109. In other words, the processor 31 transmits, to the monitoring terminal 4, a reporting event for reporting detection of a reporting act. The reporting event includes information indicating the type of reporting act item for the detected reporting act. On the monitoring terminal 4, information for reporting to the supervisor that a reporting act has been detected by the detection terminal 3 is displayed on the display (see FIG. 16).

The processor 31 then advances to ACT110. In ACT110, the processor 31 increments (increases by one) the number of occurrences stored in the count table 332 in correlation with the reporting act ID of the reporting act detected. The processor 31 then compares the number of occurrences to the reporting threshold value stored in the setting table 331 for the reporting act ID, as ACT111. The processor 31 determines whether the number of occurrences is equal to or greater than the reporting threshold value, as ACT112. When the number of occurrences is less than the reporting threshold, the processor 31 returns to the standby state of ACT 101 and ACT 102.

When the number of occurrences is equal to or greater than the reporting threshold value, the processor 31 advances to ACT113. The processor 31 sets the report flag (report F) stored in the count table 332 for the reporting act ID to "1", as ACT113. Furthermore, the processor 31 makes a report to the buyer as ACT114. In other words, the processor 31 transmits a reporting event for reporting that a reporting act of particular type has been detected to the self-POS terminal 1. The reporting event includes information indicating the type of the reporting act item that has been detected. At the self-POS terminal 1 that receives the reporting event, information for reporting to the buyer can be displayed on a part of the screen of the touch panel 105 (see FIG. 15). The processor 31 then returns to the standby state of ACT101 and ACT102.

Here, the processor 31 functions as the detection means 311 by implementing the processing of ACT101 to ACT108. The processor 31 functions as the reporting means 312 by implementing the processing of ACT110 to ACT114. The processor 31 functions as the second reporting means 313 by implementing the processing of ACT 109.

### Explanation of types of reporting acts and detection operations

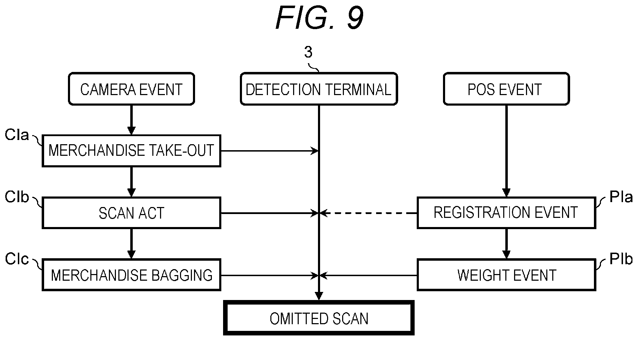

FIG. 9 is a schematic diagram showing a reporting act detection operation of a reporting act item "omitted scan." The reporting act item "omitted scan" is an act of not scanning the bar code of the merchandise that the buyer has taken from the basket stand 102 and placed in a plastic bag or personal bag on the bagging stand 103 using the scanner 108 at the self-POS terminal 1. For example, if merchandise is placed in a bag without the barcode thereof being read because the buyer improperly holds the merchandise over the reading window 109 of the scanner 108 this corresponds to the reporting act item "omitted scan."

In response to such act, the event log storage unit 334 stores a merchandise take-out event CIa as a camera event, then stores a scan act event CIb, and then stores a merchandise bagging event CIc. For POS events in the process, only weight event PIb is stored, and registration event PIa is not stored.

When the merchandise take-out event CIa, the scan behavior event CIb, and the merchandise bagging event CIc are stored in sequence order, and the weight event PIb is stored, but the registration event PIa is not stored, the detection terminal 3 detects that there has been a reporting act item "omitted scan." Note, even when the buyer places the purchased merchandise in a bag without holding the purchased merchandise over the reading window 109, this case corresponds to a reporting act item "omitted scan." In other words, when the merchandise take-out event CIa and the merchandise bagging event CIc are stored, the weight event PIb is stored, but the registration event PIa and the scan behavior event CIb are not stored, the detection terminal 3 detects that there has been a reporting act item "omitted scan."

In the present embodiment, the reporting threshold value for the reporting act item "omitted scan" is set to "2." In other words, when a reporting act item "omitted scan" is detected two times or more in one transaction, a report is made to the self-POS terminal 1. If it is only detected once, a false detection can also be considered a possibility, so a report is not made to the self-POS terminal 1. In other words, the buyer's self-operation is not stopped due to a report being issued. However, a report is made to the monitoring terminal 4 even if it is the first time an omitted scan is detected. Therefore, the supervisor may more closely monitor or approach the buyer to check for the presence or absence of an omitted scan, and may instruct a re-scan if an omitted scan is recognized, thereby resolving the omitted scan issue.

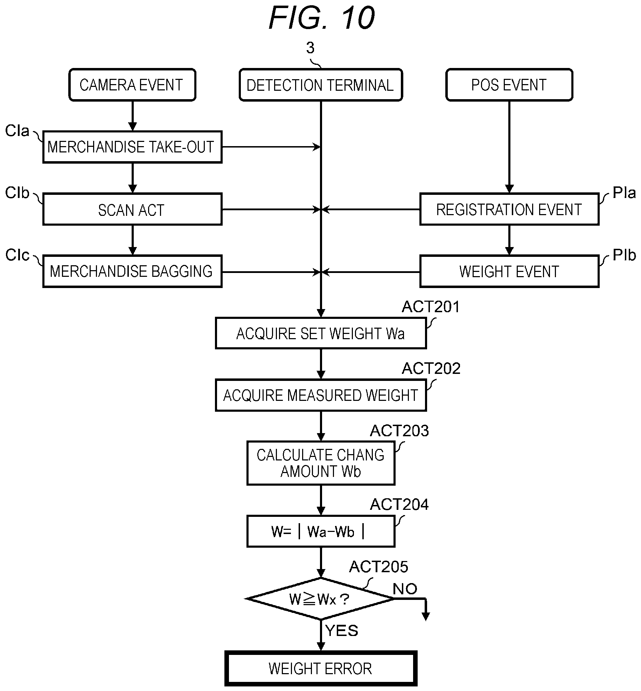

FIG. 10 is a schematic diagram showing the reporting act detection operation of a reporting act item "weight error". The reporting act item "weight error" is an act where the purchased merchandise taken out of the basket stand 102 and placed in a plastic bag or personal bag on the bagging stand 103 does not match the merchandise specified by the barcode scanned by the scanner 108 of the self-POS terminal 1. For example, a buyer taking two items of purchased merchandise from a shopping basket, but scanning only one item of these items and placing the two items in a bag corresponds to the reporting act item "weight error." For example, with respect to merchandise sold in packs in which a plurality of identical items of merchandise are combined, a bar code corresponding to the pack selling price is printed and a bar code corresponding to a single item price is also printed on each item of merchandise. An act of taking such merchandise sold in packs from the basket stand 102, scanning a barcode corresponding to the single item price instead of a bar code corresponding to the pack selling price, and placing the merchandise in a bag also corresponds to a reporting act item "weight error."

In response to such act, the event log storage unit 334 stores a merchandise take-out event CIa for a camera event, then stores a scan act event CIb, and then stores a merchandise bagging event CIc. For the POS events, registration events PIa are stored, and then weight events are stored.

When the merchandise take-out event CIa, the scan behavior event CIb, and the merchandise bagging event CIc are stored in order, and the registration event PIa and the weight event PIb are stored in order, the detection terminal 3 acquires the set weight Wa of the merchandise specified by the merchandise code provided in the registration event PIa (ACT201). The detection terminal 3 acquires the measured weight provided in the weight event (ACT202). Then, the detection terminal 3 calculates the change amount Wb between the measured weight provided in the previous weight event and the measured weight provided in the current weight event (ACT203).

The detection terminal 3 calculates the difference W between the set weight Wa and the change amount Wb (ACT204). Then, the detection terminal 3 checks whether the difference W is equal to or greater than the determination value Wx (ACT205). The determination value Wx can be any value exceeding the allowable range ± α of the set weight Wa. When the weight of the merchandise to which the same bar code is attached is substantially uniform, the determination value Wx may be "0" or a value close to "0." However, there are some types of merchandise for which weight is not always uniform, such as vegetables, fruits, side dishes, or the like. An appropriate determination value Wx (Wx > α) exceeding the allowable range ± α of the set weight Wa may still be set for such merchandise.

When the difference W is less than the determination value Wx (NO in ACT205), the detection terminal 3 does not detect the reporting act item "weight error". In contrast to this, when the difference W is equal to or greater than the determination value Wx (YES in ACT205), the detection terminal 3 detects that there has been a reporting act item "weight error".

In the present embodiment, the reporting threshold value for the reporting act item "weight error" is set to "2." In other words, when the reporting act item "weight error" is detected two times in one transaction, a report is made to the self-POS terminal 1. If it is only detected once, a malfunction of the scale unit 122 is also considered a possibility such as due to the positioning of the bagged merchandise or the like, so a report is not made to the self-POS terminal 1 at this time. In other words, the buyer's self-operation is not stopped due to a report. A report is made to the monitoring terminal 4 even when it is the first time, so the supervisor can go to the buyer's side to check the legitimacy of the merchandise for which the weight error has occurred.

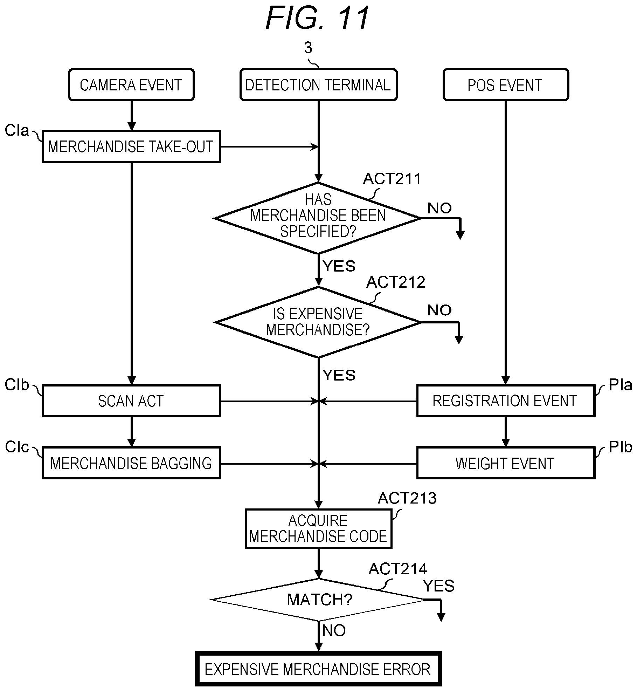

FIG. 11 is a schematic diagram showing the reporting act detection operation of a reporting act item "expensive merchandise error". The reporting act item "expensive merchandise error" occurs when merchandise taken from the basket stand 102 and placed in a plastic bag or personal bag on the bagging stand 103 appears to be expensive merchandise, but the merchandise specified by the barcode scanned by the scanner 108 at the self-POS terminal 1 does not match the expensive merchandise. For example, merchandise with a unit price above a predetermined amount is set in advance as an expensive merchandise threshold. An act of a buyer taking out expensive merchandise and other items of merchandise from a shopping basket, but scanning only the inexpensive items of merchandise and placing the scanned merchandise in a bag, but hiding the expensive merchandise without placing in a bag corresponds to the reporting act item "expensive merchandise error." Alternatively, when a buyer improperly holds expensive merchandise over the reading window 109 of the scanner 108 and the barcode is not read but the merchandise is placed in a bag may also correspond to the reporting act item "expensive merchandise error." It should be noted that the such an act can also be considered equivalent to the reporting act item "omitted scan."

In response to such act, the event log storage unit 334 stores a merchandise take-out event CIa for a camera event, then stores a scan act event CIb, and then stores a merchandise bagging event CIc. For POS events, registration events PIa are stored, and then corresponding weight events are stored.

The detection terminal 3 checks whether the merchandise has been specified, that is, whether the merchandise code was provided for the merchandise take-out event CIa from the camera image of an act of the buyer taking out the merchandise from the basket stand 102 (ACT211). When a merchandise code is provided (YES in ACT211), the detection terminal 3 determines whether the merchandise specified by the merchandise code is set as expensive merchandise (ACT212). When the merchandise code is not provided in the merchandise take-out event CIa (NO in ACT211), or when the merchandise specified by the merchandise code is not expensive merchandise (NO in ACT212), the detection terminal 3 does not detect the reporting act item "expensive merchandise error".

In contrast to this, when the merchandise specified by the merchandise code is expensive merchandise (YES in ACT212), the detection terminal 3 detects the reporting act item "expensive merchandise error". The detection terminal 3 acquires a merchandise code from the registration event PIa (ACT213). The detection terminal 3 determines whether the merchandise code matches the merchandise code of expensive merchandise (ACT214). When the merchandise codes match (YES in ACT214), the detection terminal 3 does not detect the reporting act item "expensive merchandise error". When the merchandise codes do not match (NO in ACT214), the detection terminal 3 detects that there has been a reporting act item "expensive merchandise error".

In the present example, the reporting threshold value for the reporting act item "expensive merchandise error" is set to "1." In other words, whenever a reporting act item "expensive merchandise error" is detected, a report is made to the self-POS terminal 1. Fraudulent acts relating to expensive merchandise generally result in more serious damage to a store. Therefore, when it is detected even once, a report is made to alert the buyer. Doing so should lead to reduction in such fraudulent acts.

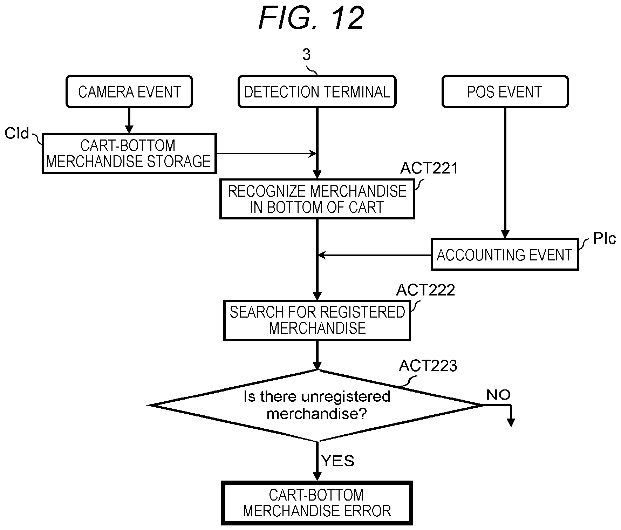

FIG. 12 is a schematic diagram showing the reporting act detection operation of a reporting act item "cart-bottom merchandise error". The reporting act item "cart-bottom merchandise error" is an act in which a buyer completes registration of purchased merchandise without scanning the purchased merchandise stored at the bottom of the shopping cart.

In response to such an act, a cart-bottom merchandise storage event CId for a camera event is stored in the event log storage unit 334. For POS events, an accounting event PIc is stored. When the cart-bottom merchandise storage event CId is acquired, the detection terminal 3 recognizes the merchandise specified by the cart-bottom merchandise storage event CId (ACT221). That is, the detection terminal 3 acquires a merchandise code provided in the cart-bottom merchandise storage event CId. In this case, in a case where merchandise codes of two or more items are provided in the cart-bottom merchandise storage event CId, each merchandise code is acquired.

Then, when the accounting event PIc is acquired, the detection terminal 3 searches for purchased merchandise registered in the transaction file 17 of the corresponding self-POS terminal 1 (ACT222). Then, the detection terminal 3 checks whether the merchandise stored in the bottom of the cart has been registered in the transaction file 17 (ACT223). That is, the detection terminal 3 checks whether purchased merchandise data matching the merchandise code(s) provided by the cart-bottom merchandise storage event CId have been registered in the transaction file 17. When all items of merchandise stored in the bottom of the cart have been registered in the transaction file 17 ("Is there unregistered merchandise?"; NO in ACT223), the detection terminal 3 does not detect the reporting act item "cart-bottom merchandise error". When even one item of the merchandise stored in the bottom of the cart is still not registered in the transaction file 17 (YES in ACT223), the detection terminal 3 detects that there has been a reporting act item "cart-bottom merchandise error."

Note, in general, merchandise stored at the bottom of the shopping cart is typically large merchandise that does not fit well or easily within the shopping basket. Therefore, when a merchandise code cannot be acquired from the cart-bottom merchandise storage event CId in ACT221, the detection terminal 3 searches whether merchandise classified as large merchandise in ACT222 has been registered in the transaction file 17. Further, when merchandise classified as large merchandise is still not registered in the transaction file 17 (YES in ACT223), the detection terminal 3 may detect that there has been the reporting act item "cart-bottom merchandise error."

In a transaction, the reporting act item "cart-bottom merchandise error" is generally detected only once. Therefore, in the present embodiment, the reporting threshold value for the reporting act item "cart-bottom merchandise error" is set to "1."

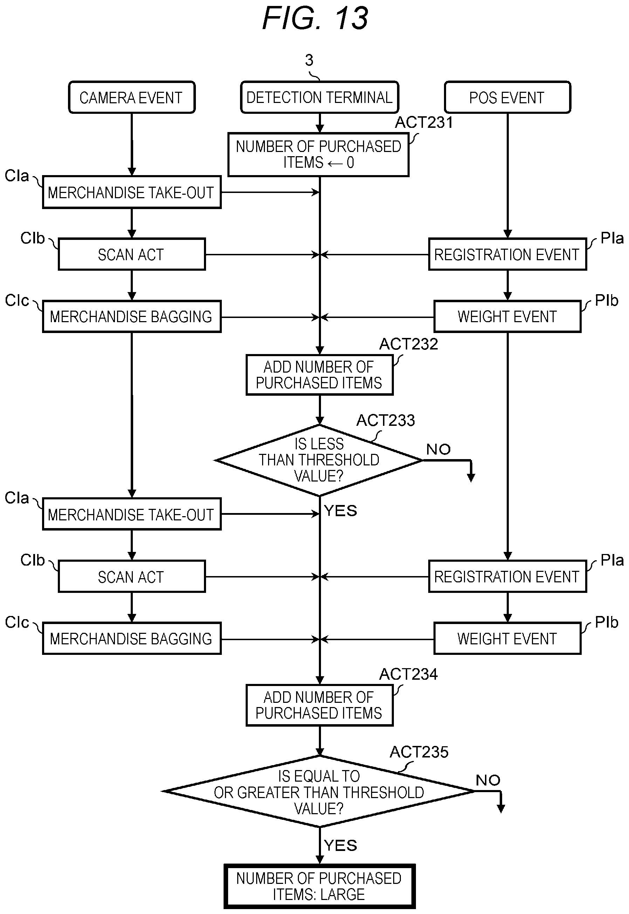

FIG. 13 is a schematic diagram showing the reporting act detection operation of a reporting act item "number of purchased items: large". The reporting act item "number of purchased items: large" occurs when a buyer purchases a large number of merchandise in one transaction. For example, when a buyer purchases ten or more items in a single transaction, the detection terminal 3 reports that the reporting act item "number of purchased items: large" has been detected to the monitoring terminal 4 and the self-POS terminal 1.

In response to such an act, the event log storage unit 334 repeatedly stores the merchandise take-out event CIa, the scan behavior event CIb, and the merchandise bagging event CIc for camera events. For POS events, registration events PIa and corresponding weight events are repeatedly stored.

The detection terminal 3 stores "0" as the default number of purchased items (ACT231). Subsequently, when the merchandise take-out event CIa, the scan behavior event CIb, and the merchandise bagging event CIc are stored in the event log storage unit 334, and the registration event PIa and weight event PIb of POS events are also stored, the detection terminal 3 adds "1" to the number of purchased items (ACT232).

The detection terminal 3 checks whether the number of purchased items is larger than the reporting threshold value (ACT233). The reporting threshold value is the number of purchased items set for determining that the reporting act item "number of purchased items: large" has occurred. For example, the reporting act item "number of purchased items: large" can has a reporting threshold value set to "10." When the number of purchased items is below the threshold value (YES in ACT233), the detection terminal 3 continues to try to detect the reporting act item "number of purchased items: large".

Every time in the event log storage unit 334, the sequence of the merchandise take-out event CIa, the scan behavior event CIb, and the merchandise bagging event CIc are stored, and the registration event PIa and weight event of POS event are stored, the detection terminal 3 adds "1" to the number of purchased items (ACT234), and repeats the process of comparing the number with the reporting threshold value (ACT235). As a result, when the number of purchased items is equal to or greater than the reporting threshold value (YES in ACT235), the detection terminal 3 detects that the reporting act item "number of purchased items: large" has occurred.

### Explanation of Reporting examples

FIG. 14 is an example of a registration screen SCa displayed on the touch panel 105 of the self-POS terminal 1. The registration screen SCa is a screen used to register merchandise. The registration screen SC is generated by the processor 11 of the self-POS terminal 1.

As shown in FIG. 14, the registration screen SCa includes a touch button BTa for merchandise without barcode and a touch button BTb for "Accounting". The touch button BTa is used when registering merchandise without a barcode, such as fresh food. In response to the touch of this touch button BTa, the self-POS terminal 1 displays touch buttons corresponding to merchandise to which a code symbol known not to be attached, a so-called merchandise selection button, and the buyer can register the merchandise by touching the merchandise selection button corresponding to the merchandise being purchased. The "Accounting" touch button BTb is used when a buyer has completed registration of items and wishes to declare for completion (accounting) of a transaction. That is, the buyer wishes to now pay for the registered items.

The registration screen SCa is divided into a registration list area ARa, a text area ARb, and a camera image area ARc. The registration list area ARa is an area for displaying a list of merchandise names, the number of purchased items, and purchase amounts of purchased merchandise registered by the buyer. The text area ARb is an area for displaying text such as guidance and messages to buyers. The camera image area ARc is an area for displaying current camera images captured by the corresponding camera 2.

In the present embodiment, when a reporting event is received from the detection terminal 3, a text explaining the reporting act is displayed in the text area ARb. FIG. 15 is an example of the registration screen SCa of a self-POS terminal 1 that has received a reporting event of the reporting act item "omitted scan." As shown in FIG. 15, the text related to the report act item "omitted scan", is displayed. For example, the text "Is there no unscanned merchandise?" is displayed in the text area ARb. Therefore, buyers who intentionally commit fraudulent acts that result in omitted scan are made aware that fraudulent acts are known on the store side, leading to prevention of fraudulent acts.

FIG. 16 is an example of a monitoring screen SCb displayed on the display of the monitoring terminal 4. As shown in FIG. 16, the monitoring screen SCb is divided into monitoring areas STa to STh for each cash register system RS. In the monitoring area STa to STh, the state of the self POS terminal 1 of the corresponding cash register system RS is displayed. Further, when a reporting event is received from the detection terminal 3 of the corresponding cash register system RS, text showing the details of the reporting act is displayed in the monitoring areas STa to STh.

FIG. 16 is a monitoring screen SCb when the reporting act item "omitted scan" is detected by the detection terminal 3 of the cash register system RS identified by the cash register number "2", and the reporting act item "omitted scan" is detected two times by the detection terminal 3 of the cash register system RS identified by the cash register number "7". When the reporting act item "omitted scan" has occurred the first time, a report is not made to the self-POS terminal 1. However, upon the second occurrence, a report is also made to the self-POS terminal 1. Therefore, the monitoring terminal 4 allows the supervisor to distinguish between a first reporting with text, for example, "omitted scan: 1 case", and a second reporting with text, for example, "omitted scan: 2 cases". To allow the supervisor to more easily distinguish the different cases, the text colors, fonts, or the like may be varied between the cases.

Note, in FIG. 16, the display of the number of cases "omitted scan: 0 case" may be configured such that every time a reporting act item "omitted scan" is detected by a detection terminal 3 of a cash register system RS, the number of cases can be incremented and displayed in a noticeable manner. That is, on the monitoring screen SCb displayed on the monitoring terminal 4, the monitoring terminal 4 changes text for a reporting act from an initial or normal state display, for example, "omitted scan: 0 case" on the monitoring screen SCb, each time a reporting act item (e.g., "omitted scan") is received from the detection terminal 3. For example, in the detection terminal 3 of a cash register system RS identified by the cash register number "2", when the reporting act item "omitted scan" is detected once, "omitted scan: 1 case" is displayed, and then when the reporting act item "omitted scan" is detected once again, "omitted scan: 2 cases" is displayed.

### Effect of First Embodiment

As detailed above, according to the first embodiment, the detection terminal 3 sets a reporting threshold value for each reporting act item identified by a reporting act ID. Then, in one transaction, whenever a reporting act item is detected, the reporting threshold value for the reporting act item is checked, and the detection terminal 3 reports that the reporting act item has been detected at the corresponding self-POS terminal 1 only for events above the threshold occurrence value. Therefore, since the frequency of reporting can be reduced compared to when reporting is made every time a potential fraud reporting act item is detected, the risk of false detection reporting to the buyer at the self-POS terminal 1 can be reduced. However, when the reporting threshold value is exceeded, a report is made at the corresponding self-POS terminal 1, which makes it possible to prevent or reduce fraudulent acts efficiently and effectively.

The detection terminal 3, however, makes a report to the monitoring terminal 4 every time a reporting act item is detected. In response to each report, the monitoring terminal 4 displays that a reporting act item has been detected at a particular self-POS terminal 1. Therefore, since supervisors can recognize in real time that a reporting act has occurred, they can be even more effective in preventing or suppressing fraudulent acts. It should be noted that the reporting destination for even a sub-threshold reporting act item detection may be the self-POS terminal 1 itself. Alternatively, the reporting destination may be a monitor device, or the like, other than the monitoring terminal.

### Second Embodiment

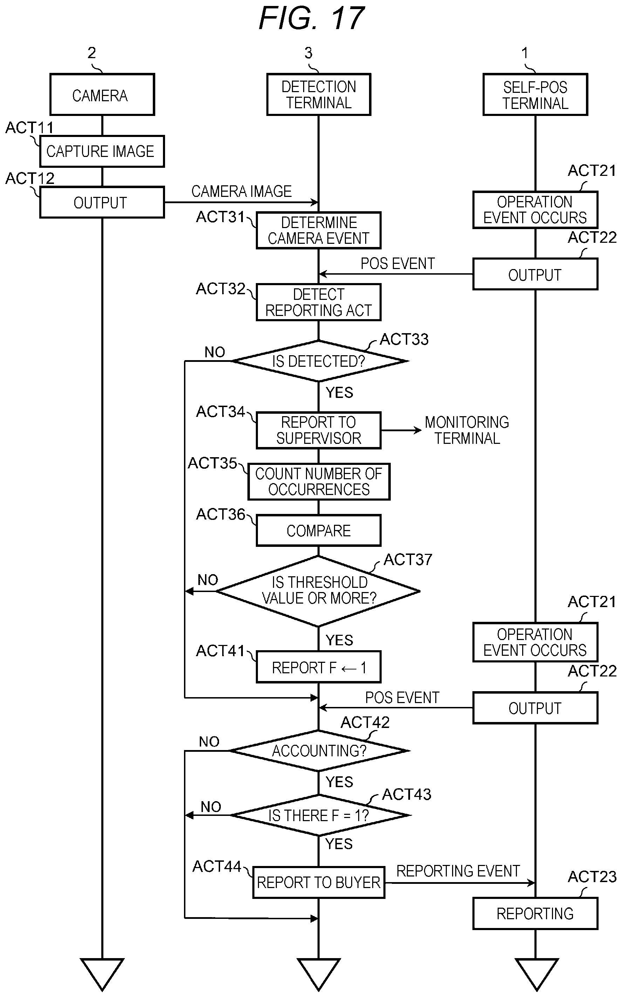

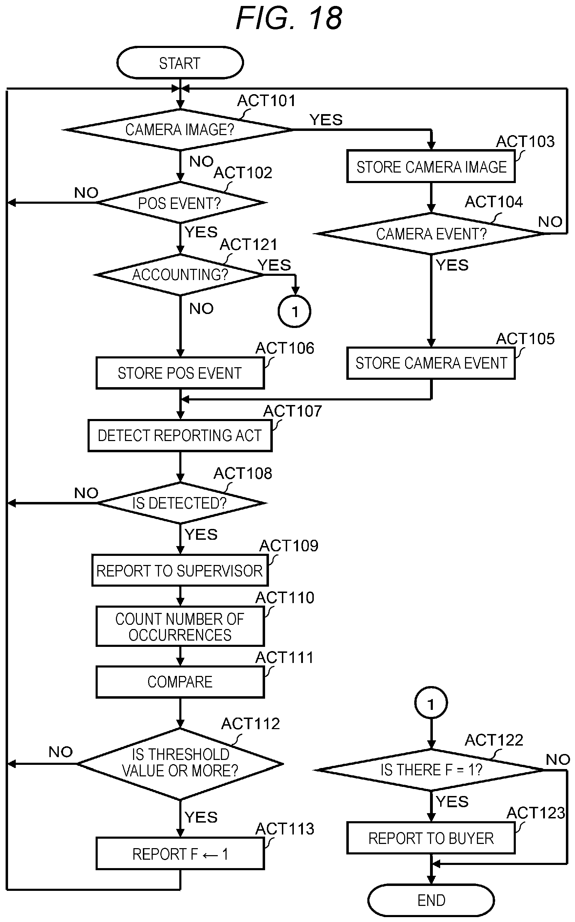

Next, a second embodiment of the detection terminal 3, which functions as an information processing device, is explained using FIG. 17 and FIG. 18.

FIG. 17 is a series of sequence diagram illustrating operations related to detection and reporting of reporting acts in the detection terminal 3 of the second embodiment along with the operations of the camera 2 and the self-POS terminal 1 in the same cash register system RS. The same reference signs and numerals are attached to the parts common to the sequence diagram of the first embodiment shown in FIG. 7.

As is clear when comparing FIG. 7 with FIG. 17, in the second embodiment, processes after determining that the number of occurrences is equal to or greater than the reporting threshold value in ACT37 differs from the first embodiment. Namely, in the second embodiment, the detection terminal 3 sets the report flag (report F) to "1" when the number of occurrences exceeds the reporting threshold value (YES in ACT37) (ACT41). At this time, the detection terminal 3 does not make a report to the buyer.

When receiving an accounting event as a POS event from the self-POS terminal 1 (YES in ACT42), the detection terminal 3 determines if there is a reporting act item for which the report flag has become "1" (ACT43). When the report flag for at least one reporting act item is "1" (YES in ACT43), the detection terminal 3 makes a report to the buyer (ACT44).

For example, when the report flag correlated with the reporting act ID of the reporting act item "omitted scan" is "1," it is reported to the buyer that the reporting act item "omitted scan" has been detected. If the report flag correlated with the reporting act ID of the reporting act item "weight error" is also "1," it is reported to the buyer that the reporting act item "weight error" has also been detected.

FIG. 18 is a flowchart for information processing executed by the processor 31 of the detection terminal 3 operating as described above. The same reference signs and numerals are attached to the parts common to the flowchart of the first embodiment shown in FIG. 8.

As is clear when comparing FIG. 8 with FIG. 18, in the second embodiment, processes after acquiring a POS event is different from the first embodiment in the standby state of ACT 101 and ACT102. In other words, the processor 31 checks whether the POS event is an accounting event, as ACT121. That is, the processor 31 checks the accounting event by detecting that the accounting button BTb on the registration screen Sca in FIG. 14 has been pressed. In a case where it is not an accounting event, the processor 31 advances to ACT106. The processor 31 then executes the process of ACT 106 to ACT113 in the same way as described in the first embodiment. However, the process of ACT114, that is, reporting to the buyer is not performed after ACT113.

When an accounting event is acquired in ACT121, the processor 31 advances to ACT122. The processor 31 checks the report flag (report F) in the count table 332, as ACT122. As a result, when the report flag for all reporting act items is "0," the processor 31 completes information processing of the procedure shown in the flowchart in FIG. 18.

In contrast to this, when at least one report flag is set to "1," the processor 31 advances to ACT123. The processor 31 makes a report to the buyer as ACT123. In other words, the processor 31 transmits a reporting event for reporting that the reporting act item for which the report flag is "1" has been detected to the corresponding self-POS terminal 1. In this case, when the report flags for two or more items are set to "1," a reporting event for reporting each reporting act item has been detected is transmitted to the corresponding self-POS terminal 1. With the above, the processor 31 ends the information processing of the procedures shown in the flowchart of FIG. 18.

Thus, in the second embodiment, the detection terminal 3 sets a reporting threshold value for each reporting act identified by the reporting act item, and when the reporting act is detected the reporting threshold value or more, it is reported that the reporting act for the reporting act item has been detected, at the timing of receiving the accounting event from the corresponding self-POS terminal 1. Therefore, compared to the first embodiment in which a report is made at the timing of receiving the reporting act the reporting threshold value or more, since the frequency of reporting is only once, the risk of false detection reporting to the buyer can be further reduced. Further, since a report is made after merchandise registration is completed, it does not interfere with the operation of merchandise registration for customers unfamiliar with the operation of the self-POS terminal 1. Thus, the time required for merchandise registration can be shortened. The detection terminal 3 makes a report to the monitoring terminal 4 every time a reporting act item is detected. Therefore, prevention or reduction of fraudulent acts is effective.

### Other Embodiments

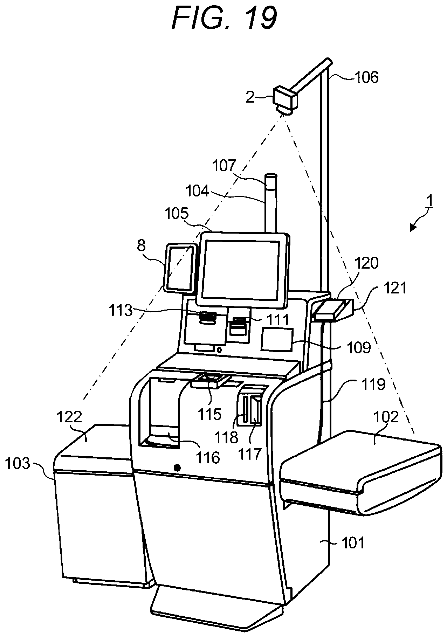

In the embodiment described above, the self-POS terminal 1 uses a part of the registration screen SCa as the text area ARb and the camera image area ARc. Regarding this point, as shown in FIG. 19, a buyer display 8 is provided on the self-POS terminal 1. For example, the buyer display 8 is provided next to the left side of the touch panel 105 that displays a registration screen SC, or the like. It should be noted that the position of the buyer display 8 is not limited to the position shown in FIG. 19. When it is a position where the buyer can check it, it may be disposed anywhere.

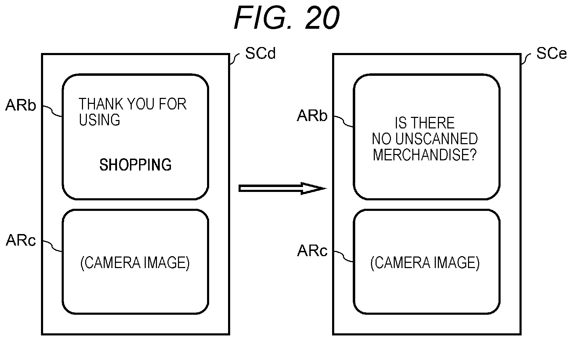

As shown in FIG. 20, the self-POS terminal 1 divides the screen SCd of the buyer display 8 into the text area ARb and the camera image area ARc. Then, as shown on screen SCe in the same figure, when a report event is received from the detection terminal 3, the text "Is there no unscanned merchandise?" indicating the report act item designated by the report event, for example, "omitted scan" is displayed in the text area ARb. By providing the buyer display 8 on the self-POS terminal 1 in this way, the buyer can more accurately recognize the report content. Further, the registration screen SCa of the touch panel 105 can occupy a larger registration list area ARa.

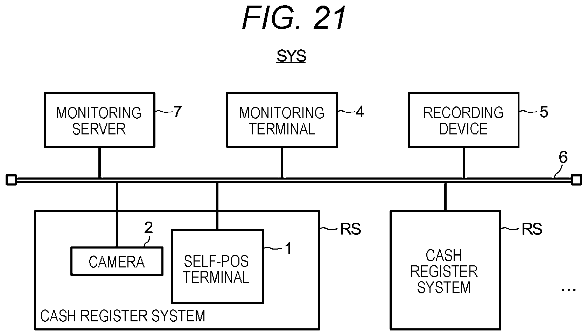

In an above embodiment, as shown in FIG. 1, a detection terminal 3 to which an information processing device is applied is provided separately for each cash register system RS. However, as shown in FIG. 21, the detection terminal 3 can be eliminated from the cash register system RS, and instead a monitoring server 7 (an example of a detection device) can be connected to the communication network 6 to configure the self-checkout system SYS. The monitoring server 7 is configured to perform the functions of the detection terminal 3 for each cash register system RS. With such a configuration, an effect similar to the first or second embodiments can be achieved.

In the above embodiments, the detection terminal 3 is described as an example of an information processing device capable of preventing or reducing fraudulent acts efficiently and effectively while reducing the risk of reporting false detections to buyers. However, the information processing device is not limited to being such separate a detection terminal 3. For example, other system devices, such as a self-POS terminal 1, a camera 2, a monitoring terminal 4, or a recording device 5 may be provided with the detection means 311, the reporting means 312, and the second reporting means 313, as described for the first embodiment, and each such device may therefore function as an information processing device in an embodiment.

In some examples, the detection terminal 3 need not have all of the described functions of an embodiment, and an information processing system may be implemented by providing some of the functions of the detection terminal 3 to one or more of the self-POS terminal 1, the camera 2, the monitoring terminal 4, or the recording device 5, or otherwise. For example, in the first embodiment, the detection terminal 3 itself functions as the detection means 311. However, the self-POS terminal 1 can have the functions of the acquisition means 312 and the second reporting means 313. The self-POS terminal 1 can also have the setting table 331 and the count table 332. According to this configuration, when the detection terminal 3 detects a buyer's act requiring a report at the self-POS terminal 1, that is, a reporting act, the detection terminal 3 outputs information to the self-POS terminal 1. Upon acquiring the information of the reporting act, the self-POS terminal 1 makes a report to the monitoring terminal 4. Similarly, when information about the reporting act is acquired, the self-POS terminal 1 updates the number of occurrences in the count table 332. Then, within a single transaction, when the number of detected reporting acts exceeds the reporting threshold set in the setting table 331, a notice that the reporting act has been detected is reported by displaying a pop-up image or screen on the touch panel 105. With such a configuration, it is possible to achieve an advantageous effect of being able to prevent or reduce fraudulent acts efficiently and effectively while reducing the risk of reporting false detections to buyers.

The types of reporting acts detected by the detection means 311 are not limited to the five types of reporting act items "omitted scan," "weight error," "expensive merchandise error," "cart-bottom merchandise error," and "number of purchased items: large." For example, an act of bagging a merchandise item said to be without a bar code attached thereto is performed without performing a selection operation on the touch panel 105 is detected, a reporting act item "barcodeless merchandise error" may be considered to be detected. For the reporting act item "barcodeless merchandise error," it is possible to lower the reporting frequency by setting the reporting threshold value to "2." For another example, when an act of touching the "Accounting" touch button is detected while merchandise still remains on the basket stand 102, the reporting act item "unregistered merchandise error" may also be detected. Since the "Accounting" touch button is generally only touched once in per transaction, the reporting threshold value for the reporting act item "unregistered merchandise error" inevitably becomes "1."

In addition, embodiments of the present disclosure are described above, but these embodiments are presented as an example, and are not intended to limit the scope of the disclosure. These new embodiments can be realized in a variety of other forms, and various omissions, replacements and changes can be made, without departing from the scope of the disclosure. These embodiments and variations thereof are provided in the scope of the disclosure, and provided in the scope of the disclosure and their equivalents as described in the appended claims.

## Claims

1. A detection device (3) for a registration system, the detection device comprising:
a communication interface (35) connectable to a point-of-sale terminal (1), a camera (2), and a monitoring terminal (4); and
a processor (31) configured to:
receive a camera image from the camera via the communication interface, the camera image depicting a customer at the point-of-sale terminal;
receive point-of-sale event signals from the point-of-sale terminal via the communication interface, the point-of-sale event signals corresponding to operations of the customer at the point-of-sale terminal;
determine, based on the received camera image and the received point-of-sale event signals, whether a reportable act has occurred in the operations of the customer at the point-of-sale terminal; and
output a report of the reportable act to the point-of-sale terminal via the communication interface if a threshold number of occurrences set for the reportable act has been met or exceeded during the operations of the customer at the point-of-sale terminal, the report causing the point-of-sale terminal to provide a notification of the reportable act to the customer.

2. The detection device according to claim 1, wherein the processor is further configured to:
output a report of the reportable act to the monitoring terminal whenever the reportable act is determined to have occurred.

3. The detection device according to claim 1 or 2, wherein the communication interface is connected to the point-of-sale terminal, the camera, and the monitoring terminal via a network.

4. The detection device according to claim 3, wherein the network is a local area network.

5. The detection device according to any one of claims 1 to 4, wherein the communication interface is connectable to a plurality of point-of-sale terminals and a plurality of cameras.

6. The detection device according to any one of claims 1 to 5, wherein the communication interface is connected to a plurality of point-of- sale terminals, a plurality of cameras, and the monitoring terminal.

7. The detection device according to any one of claims 1 to 6, wherein the output of the report occurs when the point-of-sale event signals indicate the customer has requested to begin a payment operation at the point-of-sale terminal.

8. The detection device according to any one of claims 1 to 7, wherein the reportable act is an omitted scan event.

9. The detection device according to any one of claims 1 to 8, wherein the reportable act is a weight error.

10. The detection device according to any one of claims 1 to 9, wherein the reportable act is an expensive merchandise error.

11. The detection device according to any one of claims 1 to 10, wherein the reportable act is a cart-bottom merchandise error.

12. A registration system, comprising:
a point-of- sale terminal (1);
a camera (2) positioned to capture images of a customer at the point-of-sale terminal; and
the detection device of any one of claims 1 to 10, wherein:
the communication interface is connected to the point-of- sale terminal and the camera, and is connectable to a monitoring terminal.

13. A computer-readable, non-transitory medium storing program instructions which when executed by a processor of a detection device for a registration system causes the detection device to perform a method comprising:
receive a camera image from a camera via a communication interface, the camera image depicting a customer at the point-of-sale terminal;
receive point-of-sale event signals from a point-of- sale terminal via the communication interface, the point-of-sale event signals corresponding to operations of the customer at the point-of-sale terminal;
determine, based on the received camera image and the received point-of-sale event signals, whether a reportable act has occurred in the operations of the customer at the point-of-sale terminal; and
output a report of the reportable act to the point-of-sale terminal via the communication interface if a threshold number of occurrences set for the reportable act has been met or exceeded during the operations of the customer at the point-of-sale terminal, the report causing the point-of-sale terminal to provide a notification of the reportable act to the customer.

14. The computer-readable, non-transitory medium according to claim 13, the method further comprising:
output a report of the reportable act to the monitoring terminal whenever the reportable act is determined to have occurred, preferably wherein the reportable act is an omitted scan event, a weight error and/or an expensive merchandise error.

15. The computer-readable, non-transitory medium according to claim 13 or 14, wherein the output of the report occurs when the point-of-sale event signals indicate the customer has requested to begin a payment operation at the point-of-sale terminal.
